# EUROPEAN PATENT SPECIFICATION

(11) **EP 3 801 822 B1**
(45) Date of publication and mention of the grant of the patent: **03.08.2022**
(21) Application number: 18782180.6
(22) Date of filing: 08.06.2018
(51) Int. Cl.: B01D 46/00, B01D 46/40, B01D 29/11, B01D 29/44, B07B 1/46

(54) **METHOD FOR PRODUCING WEDGE WIRE FILTER TUBES WITH NARROWED SLOTS**
HERSTELLUNGSVERFAHREN FÜR KEILDRAHTFILTERROHRE MIT VERENGTEN SCHLITZEN
PROCÉDÉ DE FABRICATION DES TUBES À FILTRE MÉTALLIQUE À FILS PROFILÉS À FENTES ÉTROITES

(43) Date of publication of application: 14.04.2021
(73) Proprietor: Trislot N.V., 8790 Waregem (BE)
(72) Inventor: DE BOCK, Koen, 8500 Kortrijk (BE)
(74) Representative: Chielens, Kristof
(86) International application number: PCT/IB2018/000735
(87) International publication number: WO 2019/234466

(56) References cited:
- EP-A1- 1 818 089
- US-A- 3 561 605
- US-A1- 2007 197 667

## Description

The present invention relates to filter devices for the separation of solid particulate materials from liquid streams, which are widely used in several technical fields and industrial sectors such as water purification treatment, chemical and petrochemical production and processing, food industries etc., including pressure filtration as applied in dewatering of slurries and in the removal of fine particles and impurities from thick and viscous liquids.

Suitable filtration materials and structures therefor are often of the type filter grids or screens and wire filter tubes, which are obtainable by securing together support members and closely spaced profile wires, thereby forming filter slots or interstices delimitated by adjacent profile wire elements. The known filter structures mentioned are clearly illustrated in the product leaflet of present applicant TRISLOT, see for instance the Trislot-document "Turning bright ideas into perfect screens" with date of 24-10-2013.

The invention concerns more in particular prismatic, preferably almost perfectly cylindrical or tubular filter constructions of the type wire filter tube (cf. "slot tube"), which may be shaped by providing a supporting construction of axially parallel, longitudinal profile members spaced-apart and arranged along peripheral circle positions of filter tube section; around said support member arrangement there is spirally wound a profiled wire of desired cross-section and diameter and at each crossing of said enveloping wire with a supporting profile member it is firmly attached thereto, typically and preferably by a weld connection, such as by electrical welding (spot-welding) or by laser welding.

This well-known manufacturing method is described int. al. in patent document US 5705069 with date of 06-01-1998, see in particular figure 8; said patent furthermore illustrates filter devices for centrifugal water treatment that are equipped with screen baskets having filtration walls constituted by wedge wire slot tube filter material.

Patent document US 3561605 of 09-02-1971 discloses a self-cleaning tubular screen made from wedge-shaped wires helically wound about inner support rods and electrically spot-welded at each junction of wire and rod. Said wires form a continuous V-shaped slot of increasing cross-sectional area in the outward radial direction. Enhanced movement of screened slurry particulates in the longitudinal direction inside and through the tubular screen is obtainable by maintaining the screen at a slope, in particular by screen rotation together with using the inner support rods as a means for effectively driving slurry material longitudinally forward, see column 1 of US 3561605. For this purpose the support rods may be slightly spiralled, as shown in figure 3, which can be effectuated by subjecting the tubular screen with parallel support rods to a twisting force at an elevated temperature, whereby one end is turned relatively to the other end, see column 3, lines 35 to 52.

Publication US 2007/0197667 A1 of 23-08-2007 describes a process for separating catalyst particles from a liquid. One of the filter elements, see figures 2-4, comprises a spiral wound wire embedded in or attached to circumferentially spaced elongate supports, whereby filtration openings or slots are provided between adjacent loops of the wire, which wire slots have tapering surfaces. The width of the wire at its base is typically about 1.2 mm but preferably is 0.8 mm or 0.5 mm to ensure less variation in slot openings, which are typically from 10 to 25 microns, but preferably are not greater than 20 microns, see page 4, paragraphs {0055} and {0056}.

Document EP 1818089 A1 published on 15-08-2007 discloses submerged intake screens having a helical internal support structure. Said structure supports a cylindrical screen and comprises one or more helical members which traverse the screen. The embodiment in figure 5 shows a series of helical supporting bars which follow the screen but do not meet the plate end and cap of the screen.

The gaps or slots between adjoining consecutive (profiled) wire windings are kept constant in width in the length direction of the filter slot tube by helical coiling of screen wire with uniform pace around the supporting profile members.

The slot opening dimension is determining for the separating performance of the filter tube or screen cylinder, and is primarily defined by the geometrical parameters of the spiral wire winding or its helical line (pitch, pace ...), and is further dependent on the profile type or cross-section of the wire windings.

Although in principle any suitable wire profile shape can be used (round, square, rectangular, etc.), it is more customary to employ wires of a trapezoid shape, or wires having a wedge-shaped or triangular cross-section, and preferably comprising a rounded upper angle portion (for easier welding contact with support member).

With above mentioned profile wires the filtration gaps over the entire surface of the wire filter tube can be provided, on one side of the filter tube, with a wedge-shape geometry which is favourable in filtration practice by lowering flow resistance of the filter surface, and which improves the efficiency of the filter tube device, by slowing down clogging of the filtration gaps and by enabling quick backflushing/-washing or clean rinsing of obstructed filter slots.

It is an object of the present invention to provide for the need of slot filter tubes which are moreover capable of separating off in an effective manner also fine to very fine particles in liquid media.

Indeed, considering the present state of the art of manufacturing slot filter tubes it remains technically difficult for a desired filter slot width of markedly below 40 microm (0.040 mm), more in particular for filtering gaps of 0,020 mm in width and smaller, to achieve a slot tube filter product that is still of sufficient quality by using tight spiral winding and resistance spotwelding; as a matter of fact the quality requirement of uniformly even filter openings and the provision of a sufficiently large filtration capacities pose serious technical problems, and furthermore the productivity of fine slot tube fabrication itself becomes problematic. For these reasons the separation of fine and very fine particulate solids from liquids is often carried out by using filter slot tubes in combination with filtration gauzes, or small-mesh screen cloth is applied in combination with differing filtration methods. However, said combination processes appear to be seldom satisfactory as full-valued alternatives for pure slot tube filtering methods, given that said combined filter systems give more often rise to technical problems, resp. are less efficient and as a result lead to less economical liquid/solid separations. Above-mentioned limitations, disadvantages and problems in using state of the art devices are solved in a most effective way by applying a novel fabrication method according to the invention inclusive the use of the thereby obtained filter slot tube of the invention, which is described into more detail and clarified hereinbelow.

In the most general sense and in its broadest scope the method according to the invention essentially consists in that a cylindrical or prismatic slot tube grid structure constituted by axially extending support profiles fastened together radially across by profiled wire elements, whereby adjoining radial profile wire elements define a continuous interstitial slot opening, i.e. a filtering gap of predetermined desired width, is subjected to circumferential rotational twist or torsioning until a given amount of permanent plastic torsion deformation is attained, as recited in main independent claim 1.

The so obtained slot tube structure is characterized by a spiral repositioning of the support profiles following a helical line away from the original axially orientated parallel position of the support profiles on the cylindrical or prismatic mantle of the slot tube, and further by a narrowing of the grid /screen slot openings between adjacent consecutive wire profile elements, as compared to the original slot opening prior to a rotational twist step.

The expression "fastened together radially across" may encompass different attachments or kinds of solid connections between the axial support profiles and the crossing radial profile wires. Most convenient is a weld connection obtainable by electrical resistance welding or by laser welding. But otherwise there is also the possibility of using a mechanical coupling or even an adhesive connection in order to solidly secure each crossing between support profile and profile wire. Among mechanical couplings there are for instance e.g. pin and eye connections, knot or loop attachments and the like.

Conventional and most common types of slot tube screens have a cylindrical shape with round cross-section, which preferably is a perfect circle, but round and polygonal sections approaching a circular shape also belong to the realm of the invention.

Indeed, the concept of the present invention is equally applicable to prismatic tube sections, whereby axially extending parallel support profiles, considered in cross-section, are located on the angular points of a preferably regular polygon.

The radially crossing profile wires may also comprise distinct annular wire elements which are equally distanced, arranged parallel to one another and secured to the supporting profiles.

It is however preferred that the profile wire follows an uninterrupted path and is continuously wound by a non-stop process in a spiral fashion around and up axial supporting profile members, whereby at each contact crossing the profile wire and supporting profile are firmly attached to oneanother, preferably by a weld connection.

According to a preferred embodiment of carrying out the invention the supporting profiles are disposed in an axial-symmetric way and parallel to one another as peripheral mantle lines of a cylindrical tube with a circular cross-section of desired diameter, and the continuous profile wire is helically coiled around the support profiles, whereby the non-stop running wire is permanently fixed thereto at each crossing by means of a spot-welding connection. In this helical winding and assembling process by spot-welding a predetermined initial slot opening width is established between mutually adjoining profile wires, whereby the characterizing feature of the invention consists in the fact that the required final slot opening is realized by subjecting the slotted tubular screen or filter body to plastic torsion in the axial direction of the slotted screen tube.

A suitable method for carrying out the key feature of the invention may comprise imobilizing one outer end portion of the cylindrical slot tube body, and consequently connecting the opposed tubular end portion with an adapted claw or clutch of a torque motor and thereby driving the latter end portion into rotational twisting until the cylinder body undergoes a permanent plastic torsion deformation. As a result the original axial-parallel orientation of the supporting profiles of the peripheral cylinder mantle of the slot tube is tuned into a twisted path following a helical line; depending on the number of imposed torsional rotations said helical path will adopt a varying angle towards the axial direction of the slot filtertube.

Owing to the fact that the solid weld connections are undeformable and hence will stay co-determinating for an axial interdistance between adjoining profile wires, it is consequently obvious that the oblique stretch deformation of the filter tube mantle's support profiles under the effect of torsional rotation, whereby the number of rotational twists determines the final oblique position of the helical path of the support profiles, will give rise to a proportional decrease or narrowing of the resulting slot width between adjacent profile wires.

This implies that the invention enables to adjust in a controlled way a slot width of a filter slot tube, incl. controlled narrowing the same.

As a consequence the invention allows to decrease the filter slot opening of filter slot screen tubes, which are known per se, to such an extent that the resulting slot tubes become suitable for filtering separations of much finer particles than formerly possible with state of the art devices.

Other preferred embodiments of carrying out the method according to the invention, and furthermore slot tube grid/screen components and slot tube filter elements as preferential products embodied by the present invention are defined in one or more subordinate claims depending from main claims 1.

A deeper understanding of the essence of the invention and further peculiar details and advantages of the invention will become more apparent from the following description of a preferred exemplary embodiment of the invention, which is illustrated and elucidated by the figures of drawing sheet 1/1.

The lower drawings A and C shown in the figure columns 1A and 1C on sheet 1/1 give a perspective view resp. overall picture of a slot tube filter screen of circular cross-section. Tubular filter screen C as well as A is assembled from supporting profile rods with axial-symmetric disposition, located at circumference of above-mentioned circular cross-section, which is clearly shown in sectional views A-A en C-C in the center part of figure columns 1 A and 1C of sheet 1/1.

The external mantle of filter tube A and filter tube C consists of profile wire with wedge-shaped cross-section, which is helically wound up and around the axially arranged support profiles and at each crossing is firmly secured by a welding connection.

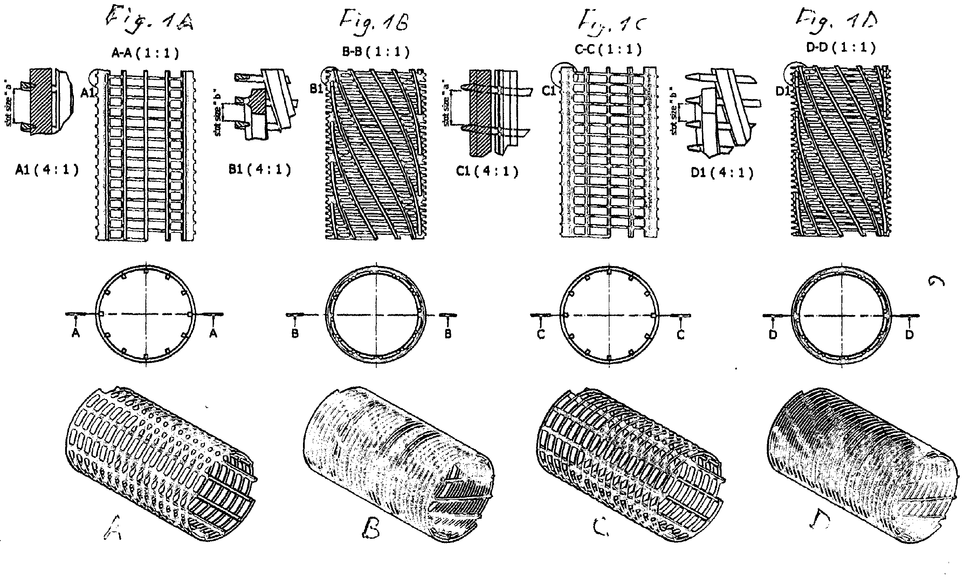

Figure 1 A illustrates a slot tube A wherein a flat side of the wedge profile wire is directed to the tube outside (with rounded top angle of wedge section spot-weld attached upon the supporting profile rods), such that interstitial filter slot openings between adjoining profile wire windings are widening in a flow direction from outside to inside the slot filter tube.

The slot filter tube C example of figure 1C shows the opposite situation: here a flat lower side of the wedge profile wire is weld-connected to the support profile rods, and adjacent wedge profile wire windings delimit interstitial filter slots that are widening in a flow direction from inside to outside the slotted filter tube.

The picture A-A with detail Al and picture C-C with detail Cl in the upper part of figures (columns) 1A and 1B on sheet 1/1 show an axial longitudinal section van filter tube A resp. filter tube C, whereby detailed close-up sections Al en C1 clarify an initial filter slot opening of width "a" before subjecting slot filter tube A as well as slot filter tube C to permanent torsion deformation by rotary torsioning.

Figures B1 and D 1 showing longitudinal section views B-B, D-D, with details Bl, Dl and further depicting overall perspective views of slot tubes B en D illustrated in the lower drawing row on sheet 1/1, elucidate more clearly which technical effect the invention is exerting , as a consequence of imposed torsional rotations, on a resulting slot opening width "b" of a slot filter tube and on the external aspect view of the tubular filter body exhibiting a helical twist of its internally arranged supporting profiles.

It is selfevident that the present invention is not limited to the exemplary embodiments of slot tubes described herein above and illustrated on drawing sheet 1/1.

Flat filter screen elements having narrowed slot openings can be manufactured in a similar but deduced way, e.g. starting from tubular slit screens provided with narrowed slot openings obtained by torsional rotation, and axial cutting/opening the tubular body and flattening out the developed slot tube jacket mantle.

Curved and flat screen or grating elements having narrowed slot openings obtained by applying the key principle of the invention, including their working up and use in filter devices and systems also fall within the scope of protection of the present invention, which is primarily defined by the technical features recited in the appended claims.

The material used for fabricating slot tube filters for the purpose of solid/liquid filtering separations is mostly selected from stainless steels of a type suitable for withstanding the corrosivity of the liquid medium, and/or requires a particular stainless steel grade satisfying specific use conditions (hygienic, toxicity, etc.) imposed by the related industrial sector, such as for instance the food industries.

It is however obvious that the inventive concept of the present invention is not restricted to the normally used stainless steel alloys, but is equally applicable to other metals and metal alloys such as copper, nickel, aluminium and alloys thereof, as for instance monel (CuNi) and also titanium, special metal alloys as superalloys etc., provided said corrosion resistant metals and alloys can be worked up to profile wire and the like profile members, and are moreover mutually connectable by welding.

## Claims

1. Method of fabricating a slot tube, in particular a slot tube screen filter, which effects controlled adjustment of a desired fine filter slot opening, which starts from a conventionally produced slot tube assembly of interconnected basic elements, which consist of axially extending support profiles wrapped around with radially crossing wire windings of profile wire, which are solidly fixed together at each mutual crossing and whereby adjoining profile wire windings delimit and define an interstitial, continuous filter slot opening of given initial width, **characterized in**
**that** said known slot tube is subjected to torsion deformation by rotary twist, whereby the slot tube mantle is twisted relative to the slot tube axis by an adjustable amount of rotations within the plastic torsion area causing a permanent helical twist of the axial support ribs, and continuing said rotational twisting until a desired final finer slot opening width or a required gradual narrowing of initial filter slot opening is reached, which final slot opening has a width smaller than 0,040 mm.

2. Method according to claim 1, **characterized in that** said final slot opening has a width smaller than 0,020 mm.

3. Method according to claim 1 or 2, **characterized in that** the profile wire comprises a cross-section selected from a round, a flat or a polygonal cross-section.

4. Method according to claim 1 or 2, **characterized in that** the profile wire comprises a wedge-shaped or triangular cross-section with rounded top angle, and whereby either the flat side or the rounded top of the wedge or triangular wire forms a solid weld connection with the supporting profile members, such that the interstitial slot opening between adjoining profile wires can be disposed as a widening gap or a narrowing wedge opening in a selected flow direction.

5. Method according to any one of the preceding claims, **characterized in that** the slot tube body has a cross-section selected form a circular section, a round section of oval shape or nearby circular form, a regular polygon or rounded polygon approaching a circle and the like, and preferably comprises the circumference of a perfect circle.

6. Method according to any one of the preceding claims, **characterized in that** the method comprises the additional step of axial cutting/opening the tubular body provided with narrowed slot openings obtained by torsional rotation and flattening out the developed slot tube jacket mantle in order to form a flat filter screen element having narrowed slot openings.

## Patentansprüche

1. Verfahren zur Herstellung eines Schlitzrohrs, insbesondere eines Schlitzrohrsiebfilters, das die gesteuerte Einstellung einer gewünschten Feinfilterschlitzöffnung ausführt, die bei einer herkömmlich produzierten Schlitzrohranordnung miteinander verbundener Basiselemente beginnt, die aus sich axial erstreckenden Trägerprofilen bestehen, die mit sich radial überkreuzenden Drahtwindungen aus Profildraht umwickelt sind, die an den gegenseitigen Kreuzungen fest fixiert sind, und wobei angrenzende Profildrahtwindungen eine interstitielle, durchgehende Filterschlitzöffnung mit einer vorgegebenen Ausgangsbreite begrenzen und definieren, **dadurch gekennzeichnet, dass** das bekannte Schlitzrohr durch eine Verdrehung einer Torsionsverformung ausgesetzt ist, wobei der Schlitzrohrmantel in Bezug zur Schlitzrohrachse in einer anpassbaren Anzahl von Drehungen innerhalb des plastischen Torsionsbereichs verdreht wird, was zu einer dauerhaften schraubenförmigen Verdrehung der axialen Trägerrippen führt, und Fortsetzen der Verdrehung bis eine gewünschte finale feinere Schlitzöffnungsbreite oder eine erforderliche schrittweise Verengung der anfänglichen Filterschlitzöffnung erreicht ist, wobei die finale Schlitzöffnung eine Breite von weniger als 0,040 mm aufweist.

2. Verfahren nach Anspruch 1, **dadurch gekennzeichnet, dass** die finale Schlitzöffnung eine Breite von weniger als 0,020 mm aufweist.

3. Verfahren nach Anspruch 1 oder 2, **dadurch gekennzeichnet, dass** der Profildraht einen Querschnitt aufweist, der aus einem runden, flachen oder vieleckigen Querschnitt ausgewählt ist.

4. Verfahren nach Anspruch 1 oder 2, **dadurch gekennzeichnet, dass** der Profildraht einen keilförmigen oder dreieckigen Querschnitt mit einem abgerundeten oberen Winkel umfasst, und wobei entweder die flache Seite oder die abgerundete Spitze des keilförmigen oder dreieckigen Drahts eine feste Schweißverbindung mit den Trägerprofilelementen ausbildet, sodass die interstitielle Schlitzöffnung zwischen angrenzenden Profildrähten als sich verbreiternder Spalt oder verengende Keilöffnung in eine ausgewählte Strömungsrichtung angeordnet sein kann.

5. Verfahren nach einem der vorstehenden Ansprüche, **dadurch gekennzeichnet, dass** der Schlitzrohrkörper einen Querschnitt aufweist, der aus einem kreisförmigen Querschnitt, einem runden Querschnitt mit ovaler Form oder fast kreisförmiger Form, einem regelmäßigen Vieleck oder abgerundeten Vieleck, das sich einem Kreis annähert, o. ä. ausgewählt ist, und vorzugsweise dem Umfang eines perfekten Kreises umfasst.

6. Verfahren nach einem der vorstehenden Ansprüche, **dadurch gekennzeichnet, dass** das Verfahren den zusätzlichen Schritt des axialen Schneidens/Öffnens des rohrförmigen Körpers umfasst, der mit verengten Schlitzöffnungen versehen ist, die durch Torsionsdrehung und Abflachen des entwickelten Schlitzrohrmantels erhalten wurden, um ein flaches Filtersiebelement mit verengten Schlitzöffnungen auszubilden.

## Revendications

1. Procédé de fabrication d'un tube à fentes, en particulier d'un filtre à tamis sous forme de tube à fentes, qui permet un ajustement contrôlé d'une ouverture de fente de filtre étroite souhaitée, partant d'un ensemble d'éléments de base mutuellement reliés de tube à fentes produit de façon conventionnelle, qui sont constitués de profilés de support s'étendant axialement enveloppés d'enroulements de fil profilé les croisant radialement, qui sont solidement fixés ensemble à chaque intersection, des enroulements de fil profilé adjacents délimitant et définissant ainsi une ouverture de fente de filtre continue interstitielle d'une largeur initiale donnée, **caractérisé en ce que** ledit tube à fentes connu est soumis à une déformation par torsion, une torsion étant appliquée à l'enveloppe du tube à fentes par rapport à l'axe du tube à fentes par une quantité de rotations réglable dans la plage de torsion plastique provoquant une torsion hélicoïdale permanente des nervures de support axiales, et l'application de ladite torsion étant poursuivie jusqu'à ce qu'une largeur d'ouverture de fente inférieure finale souhaitée ou qu'un rétrécissement progressif requis d'une ouverture de fente de filtre initiale soit obtenu(e), ladite ouverture de fente finale présentant une largeur inférieure à 0,040 mm.

2. Procédé selon la revendication 1, **caractérisé en ce que** ladite ouverture de fente finale présente une largeur inférieure à 0,020 mm.

3. Procédé selon la revendication 1 ou 2, **caractérisé en ce que** le fil profilé comprend une section transversale choisie parmi une section transversale ronde, plate ou polygonale.

4. Procédé selon la revendication 1 ou 2, **caractérisé en ce que** le fil profilé comprend une section transversale cunéiforme ou triangulaire avec un angle supérieur arrondi, et soit le côté plat, soit le sommet arrondi du fil cunéiforme ou triangulaire forme ainsi une liaison de soudure solide avec les éléments profilés de support, de telle sorte que l'ouverture de fente interstitielle entre des fils profilés adjacents peut être configurée comme un espace s'élargissant ou une ouverture cunéiforme se rétrécissant dans une direction d'écoulement choisie.

5. Procédé selon l'une quelconque des revendications précédentes, **caractérisé en ce que** le corps du tube à fentes présente une section transversale choisie parmi une section circulaire, une section ronde de forme ovale ou de forme presque circulaire, un polygone régulier ou un polygone arrondi proche d'un cercle et similaires et, de préférence, comprend la circonférence d'un cercle parfait.

6. Procédé selon l'une quelconque des revendications précédentes, **caractérisé en ce que** le procédé comprend l'étape supplémentaire de découpe/d'ouverture axiale du corps tubulaire pourvu d'ouvertures de fentes rétrécies obtenues par torsion et d'aplatissement de l'enveloppe du tube à fentes développée afin de former un élément formant tamis de filtre plat comportant des ouvertures de fentes rétrécies.
